# EUROPEAN PATENT APPLICATION

(11) **EP 3 155 899 A1**
(43) Date of publication of application: **19.04.2017**
(21) Application number: 16184038.4
(22) Date of filing: 12.08.2016
(51) Int. Cl.: A01K 11/00, A01K 29/00, A01K 1/03

(54) **LOCALIZATION SYSTEM AND ANIMAL CAGE COMPRISING THE SAME**

(30) Priority: 15.10.2015 US 201514883724
(71) Applicant: Infineon Technologies AG, 85579 Neubiberg (DE)
(72) Inventor: Hammerschmidt, Dr., Dirk, 9504 Villach (AT); Holweg, Gerald, 8055 Graz (AT); Pachler, Walther, 8010 Graz (AT)
(74) Representative: Müller Hoffmann & Partner

(57) **Abstract**

A localization system (1) includes an animal transceiver (10) and a floor transceiver circuit (40). The animal transceiver (10) is configured to be fixed to an animal (20) to transceive a radio frequency signal. The floor transceiver circuit (40) is arranged on a floor surface (30) and configured to determine a position of the animal transceiver within the floor surface on the basis of the radio frequency signal received from the animal transceiver (10). An animal cage (50) includes a cage configured to accommodate an animal (20), and the localization system (1).

## Description

### BACKGROUND

Biometric monitoring such as monitoring of blood pressure is normally realized with systems using invasive methods. Herein, a laboratory mouse is provided with a catheter to measure a blood pressure, for example. The mobility and the lifetime of such a mouse are extremely reduced by using such systems. Other available systems comprise wireless transponder systems energized by batteries. The size of the batteries and the transponder, which are implanted in the animal body, expose the mouse to a big stress. Also with these systems, the lifetime is reduced and the measurement results are not reliable due to the high stress situation. At the moment, the activity, which is also called tracking, of the mouse is determined optically, e.g. by means of cameras. This information has to be further synchronized with biometric sensor data such as the blood pressure, which is a complex task.

It is an object to provide a localization system and an animal cage comprising the same, by which monitoring of a movement profile of an animal is facilitated.

### SUMMARY

According to an embodiment of a localization system, the localization system comprises an animal transceiver and a floor transceiver circuit. The animal transceiver is configured to be fixed to an animal to transceive a radio frequency signal. The floor transceiver circuit is configured to determine a position of the animal transceiver within a floor surface on the basis of the radio frequency signal received from the animal transceiver.

According to an embodiment of an animal cage, the animal cage comprises a cage and the localization system. The cage is configured to accommodate an animal.

Those skilled in the art will recognize additional features and advantages upon reading the following detailed description and on viewing the accompanying drawings.

### BRIEF DESCRIPTION OF THE DRAWINGS

The accompanying drawings are included to provide a further understanding of the invention and are incorporated in and constitute a part of this specification. The drawings illustrate the embodiments of the present invention and together with the description serve to explain principles of the invention. Other embodiments of the invention and intended advantages will be readily appreciated as they become better understood by reference to the following detailed description.
FIG. 1A is a schematic perspective view of a localization system according to an embodiment.
FIG. 1B is a schematic perspective view of an animal cage according to an embodiment.
FIG. 2 is a schematic perspective view of a localization system according to an embodiment, in which an animal transceiver is fixed to a mouse moving on a floor surface.
FIG. 3A is a schematic perspective view illustrating methods of determining the position of an animal transceiver.
FIG. 3B is a schematic top view of four floor antennas electrically connected to one floor transceiver unit according to an embodiment.
FIG. 4 is a schematic perspective view of an animal cage according to an embodiment, the animal cage accommodating a mouse moving on a floor surface of the cage.
FIG. 5 is a schematic block diagram illustrating electronic components of an animal transceiver communicating with a floor transceiver circuit according to an embodiment.
FIGS. 6A and 6B are schematic perspective views of an implantable sensor unit of the animal transceiver according to an embodiment before and after insertion into a vessel end.

### DETAILED DESCRIPTION

In the following detailed description, reference is made to the accompanying drawings, which form a part hereof, and in which are shown by way of illustrations specific embodiments in which the invention may be practiced. It is to be understood that other embodiments may be utilized and structural or logical changes may be made without departing from the scope of the present invention. For example, features illustrated or described for one embodiment can be used on or in conjunction with other embodiments to yield yet a further embodiment. It is intended that the present invention includes such modifications and variations. The examples are described using specific language which should not be construed as limiting the scope of the appending claims. The drawings are not scaled and are for illustrative purposes only. For clarity, the same elements have been designated by corresponding references in the different drawings if not stated otherwise.

The terms "having", "containing", "including", "comprising" and the like are open and the terms indicate the presence of stated structures, elements or features but not preclude additional elements or features. The articles "a", "an" and "the" are intended to include the plural as well as the singular, unless the context clearly indicates otherwise.

The term "electrically connected" describes a permanent low-ohmic connection between electrically connected elements, for example a direct contact between the concerned elements or a low-ohmic connection via a metal and/or highly doped semiconductor. The term "electrically coupled" includes that one or more intervening element(s) configured for signal transmission may be provided between the electrically coupled elements, for example resistors, resistive elements or elements that are controllable to temporarily provide a low-ohmic connection in a first state and a high-ohmic electric decoupling in a second state.

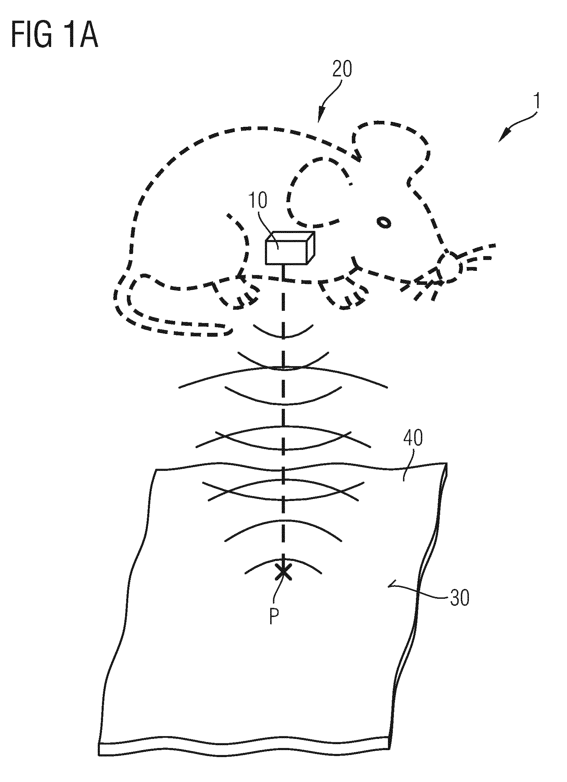

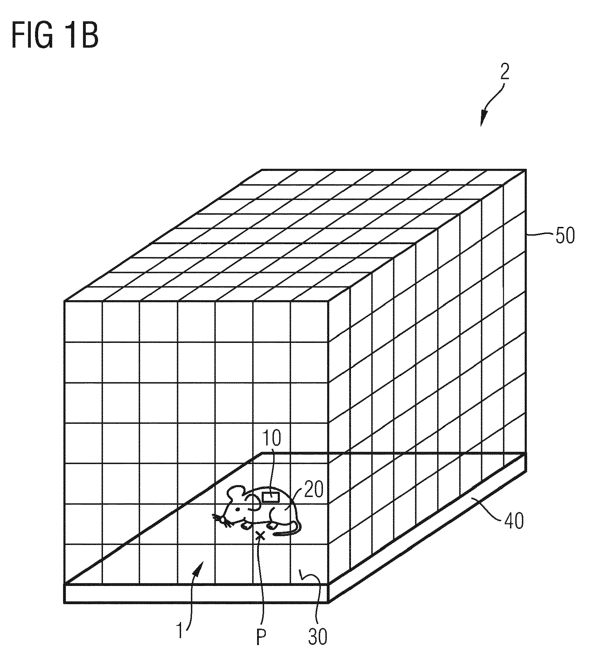

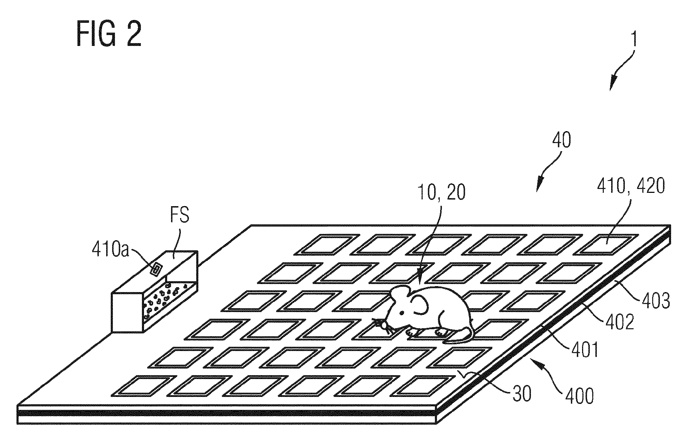

FIG. 1 is a schematic perspective view of a localization system 1 according to an embodiment. As can be seen from FIG. 1A, the localization system 1 comprises an animal transceiver 10 and a floor transceiver circuit 40. The animal transceiver 10 may be configured to be fixed to an animal 20 (as shown in FIGS. 1B and 2). The animal transceiver 10 is configured to transceive a radio frequency signal to and from the floor transceiver circuit 40. The floor transceiver circuit 40 is configured to determine a position P of the animal transceiver 10 within a floor surface 30 on the basis of the radio frequency signal received from the animal transceiver 10.

Herein, the position P of the animal transceiver 10 within the floor surface 30 shall be understood as a position P being determined by dropping a perpendicular from the center of the animal transceiver 10 to the floor surface 30. Thus, the position P of the animal transceiver 10 within the floor surface 30 is not a position of the animal transceiver 10 within three-dimensional space but a vertical projection of the position of the animal transceiver 10 to the floor surface 30. By providing the localization system 1, a monitoring of the position and a tracking of laboratory mice may be achieved easily without the use of cameras requiring a complex image processing procedure.

FIG. 1B is a schematic perspective view of an animal cage 2 according to an embodiment. As can be seen from FIG. 1B, the animal cage 2 comprises a cage 50, which is configured to accommodate the animal 20. According to an embodiment, the animal 20 may be a rodent such as a mouse, for example. The animal cage 2 further comprises the localization system 1 arranged at the cage floor of the animal cage 2. By providing the animal cage 2 according to an embodiment, the animal 20 can be kept within a defined area enabling a permanent monitoring of the animal 20 while moving on the floor surface 30 of the animal cage 2.

FIG. 2 is a perspective view of a part of the localization system 1 according to an embodiment. As can be seen from FIG. 2, the animal 20 such as a mouse is enabled to freely move on the floor surface 30 without any wiring or catheter terminals hindering the animal 20 from a free movement. The animal transceiver 10 is configured to be fixed to the animal 20. The animal transceiver 10 may be fixed to the animal 20 by implanting the animal transceiver 10 into the body of the animal 20. The animal transceiver 10 may be also fixed to the animal 20 by fixing the animal transceiver 10 to the skin of the animal 20 by gluing or clamping.

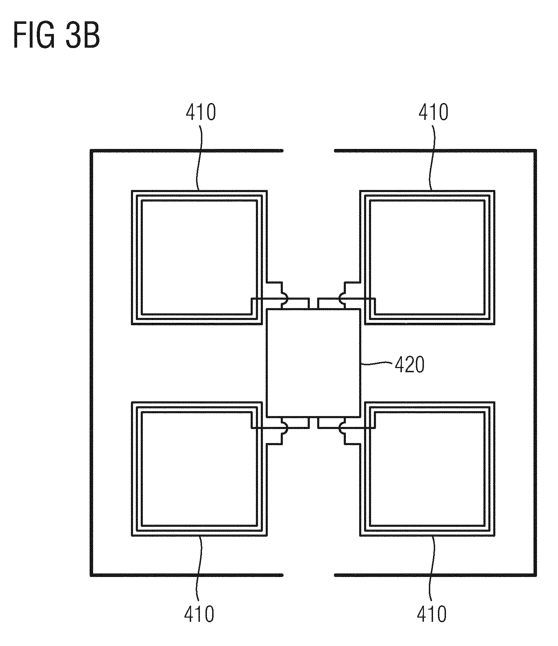

As can be seen from FIG. 2, the floor transceiver circuit 40 comprises floor transceiver units 420 (as also shown, for example, in FIG. 3B) and floor antennas 410, which are electrically connected to the floor transceiver units 420. According to an embodiment, each floor antenna 410 is connected to a respective floor transceiver unit 420. According to another embodiment, more than one floor antennas 410 may be connected to one floor transceiver unit 420. The floor antennas 410 may be arranged within the floor surface 30. The floor antennas 410 may be arranged in a regular pattern in a plane parallel to the floor surface 30. However, although not shown in FIG. 2, the floor surface 30 may also be a surface, which is curved or not plane. However, in case the floor surface 30 is not plane, the position of the animal transceiver 10 within the floor surface 30 should be still understood as a vertical projection of the position of the animal transceiver 10 in three-dimensional space to the floor surface 30. For example, the animal 20 may be climbing on a ladder or a stair-like arrangement within the cage 50, wherein the floor antennas 410 are then arranged to be underfoot of the animal 20. The floor surface 30 has thus to be understood as a surface, on which the animal 20 can stand on its feed.

According to an embodiment, the distance between the animal transceiver 10 and the floor transceiver circuit 40 in an operating state is less than 10 cm, or less than 5 cm, or less than 1 cm. The distance between the animal transceiver 10 and the floor transceiver circuit 40 shall be understood as the distance between the center of the animal transceiver 10 and the floor surface 30, in which the floor antennas 410 are arranged. According to another embodiment, the distance between the animal transceiver 10 and the nearest floor antenna 410 in an operating state may be less than 10 cm, or less than 5 cm, or less than 1 cm. According to an embodiment, the floor antennas 410 may constitute a floor antenna array. The floor antennas 410 may, as shown in FIG. 2, planar antenna coils.

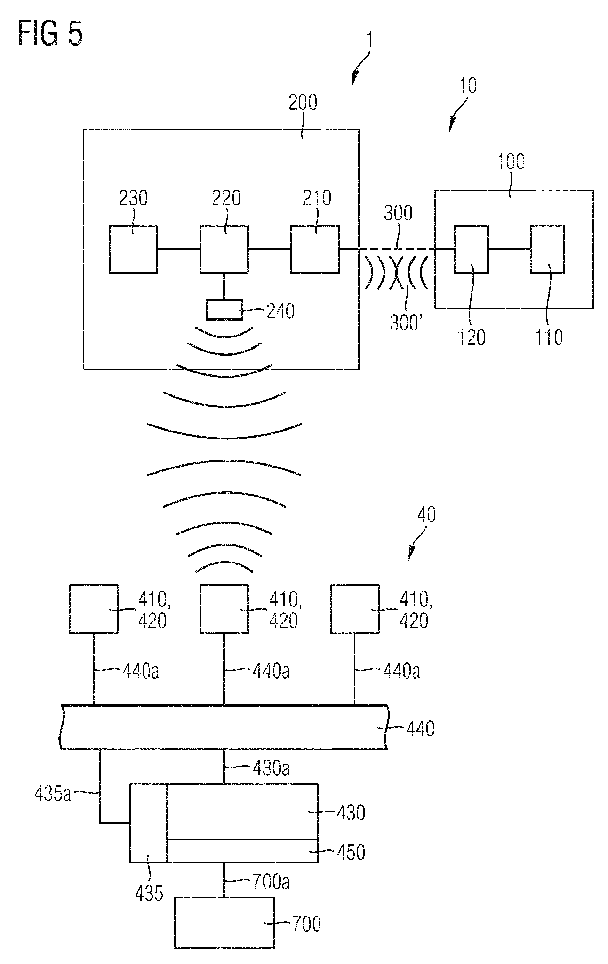

The animal transceiver 10 and the floor transceiver circuit 40 may be configured to transceive an RFID signal. In this case, the floor antennas 410 may be formed as radio frequency identification (RFID)/near field communication (NFC) antennas, wherein the antenna 240 of the animal transceiver 10 (as shown in FIG. 5 and as will be discussed in detail below) may be also formed as a radio frequency identification (RFID)/near field communication (NFC) antenna. According to an embodiment, the animal transceiver 10 and the floor transceiver circuit 40 may communicate at different radio frequency ranges, e.g. low frequency (LF) at about 28 to 135 kHz, high frequency (HF) at about 13.56 MHz, and ultra-high frequency (UHF) at 860 to 960 MHz. Each frequency range has unique characteristic in terms of RFID performance.

Near field communication is a short range technology that enables two devices to communicate when they are brought into actual touching distance. Near field communication enables sharing power and data using magnetic field induction at 13.56 MHz (HF) band, at short range, supporting varying data rates from 106 kbps, 212 kbps to 424 kbps. A key feature of near field communication is that it allows two devices to interconnect. In a reader/writer mode, a near field communication tag may be a passive device that stores data (e.g. sensor data) that can be read by a near field communication enabled device. In addition, communication may be performed via anyone of an industrial, scientific and medical (ISM) band, which operates in a frequency range between 6.765 MHz to 246 GHz and has bandwidths of up 2 GHz. Thus, a position monitoring and tracking of laboratory mice via RFID can be performed. The animal transceiver 10 may be further supplied with electromagnetic energy via the magnetic induction field of the floor antennas 410 using the RFID technology. By this energy, further implanted sensor devices may be provided with energy, as will be discussed below.

As can be seen from FIG. 2, the floor transceiver circuit 40 may comprise a stacked layer structure of a floor antenna layer 401 and a ferrite layer 402. The layer structure of the floor antenna layer 401 and the ferrite layer 402 may be formed on a substrate layer 403. The ferrite layer 402 may be a flexible ferrite foil having a thickness in a range between 5 µm and 1000 µm. The thickness of the ferrite layer 402 may have a thickness in a range between 5 µm to 300 µm or in a range between 50 µm to 100 µm. The flexible ferrite foil of the ferrite layer 402 is configured to shield the RF-field of the floor antennas 410. Ferrite foils are electrical isolators. The ferrite layer 402 may include a ferrite material such as Fe₂O₃ or Fe₃O₄, and may further include, for adapting the magnetic properties, MnZn-ferrite such as MnₐZn₍₁₋ₐ₎Fe₂O₄, or NiZn-ferrite such as NiₐZn₍₁₋ₐ₎Fe₂O₄. The floor antenna layer 401 may include an antenna pattern, which is printed on the ferrite layer 402. The printed antenna pattern may be realized by a silver printing in an inkjet process. Thus, the floor antenna layer 401 may be not a continuous layer but a patterned layer being configured to form an antenna structure. The antenna pattern may thus have a form of a loop antenna as used, for example for RF-ID antennas. As can be seen from FIG. 2, the substrate layer 403, the ferrite layer 402 and the floor antenna layer 401 may be in direct contact with each other. The substrate layer 403 may also comprise parts of the circuit of the floor transceiver circuit 40, wherein a connection between the floor antennas 410 and the floor transceiver circuit is formed by electrical vias through the ferrite layer 402.

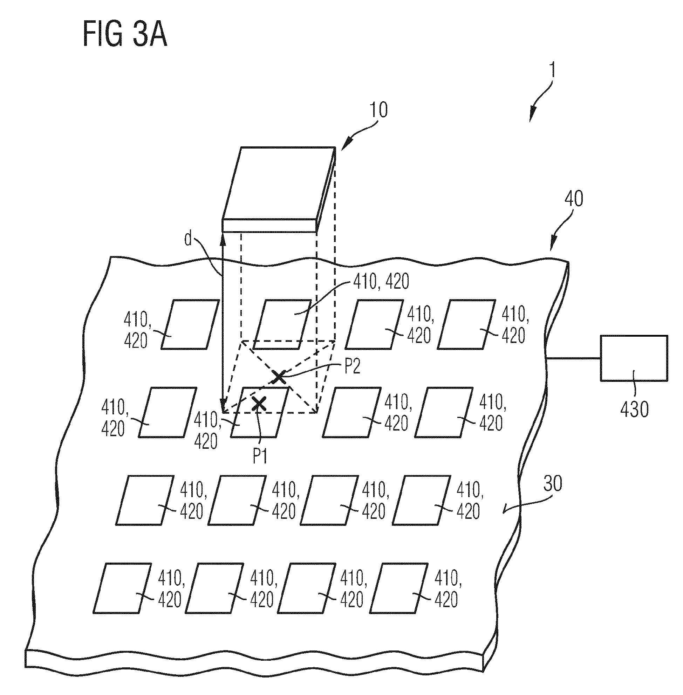

In the following, the detection of the position of the animal transceiver 10 within the floor surface 30 on the basis of the radio frequency signal received from the animal transceiver 10 will be discussed on the basis of FIGS. 3A and 3B.

According to an embodiment, the floor transceiver circuit 40 comprises a processing unit 430, which is configured to determine a position P1 of the animal transceiver 10 as a position of a floor antenna 410 receiving the highest signal intensity from the animal transceiver 10. In detail, as can be seen from FIG. 3A, the animal transceiver 10, which is, for example, implanted in an animal such as a mouse moving on the floor surface 30, is configured to communicate wirelessly with the plurality of floor antennas 410 arranged in the floor surface 30. Since the animal transceiver 10 is fixed to the animal 20, the distance of the animal transceiver 10 to the floor surface 30 is kept more or less at a same distance d from the floor surface 30. Thus, when moving the animal transceiver 10 parallel to the floor surface 30, the distance of the animal transceiver 10 to each of the floor antennas 410 varies. In any case, there is always a floor antenna 410, which is nearest to the animal transceiver 10.

In case the floor antennas 410 are near field antennas communicating via an inductive near field with the animal transceiver 10, the signal intensity received from the animal transceiver 10 by one of the floor antennas 410 is strongly correlated with the distance between the animal transceiver 10 and a respective floor antenna 410. According to one embodiment, the floor antennas 410 may be spaced apart by such a distance that communication between the animal transceiver 10 and the floor antennas 410 is possible only via one of the floor antennas 410. In such a case, the determined position P1 of the animal transceiver 10 is defined as a position P1 within the floor surface 30 corresponding to the center of the floor antenna 410, which is communicating with the animal transceiver 10 wirelessly, e.g. by RFID. In case the receiving ranges of the floor antennas 410 are overlapping, a switching of the communication from one floor antenna 410 to a neighbouring floor antenna 410 (i.e. a hand-over process) may be triggered on the basis of a threshold signal intensity received from the animal transceiver 10 by the respective floor antennas 410. Furthermore, it may be possible, to include a hysteresis margin in the hand-over process to prevent a fast oscillating behaviour in the switching between the respective communicating floor antennas 410. In other words, all well-known processes in hand-over procedure known from mobile communication may be employed in the RFID-communication between the animal transceiver 10 and the respective floor antennas 410. Although the positioning resolution of the embodiment described above is restricted to the lattice constant or averaged distance between the respective floor antennas 410, the localization process of the animal transceiver 10 is very simple and reliable. In addition, in the most cases, it is not necessary to have a greater resolution of the position of the animal 20 within the cage 50 for determining a movement profile of the animal 20. In some cases, it might be further sufficient to determine only two positions by using two floor antennas 410, in order to determine a time point of death, for example. Furthermore, the floor antennas 410 may be positioned at relevant positions such as a feeding ground, a playground or a bedding location. The floor transceiver circuit 40 may thus comprise specific location antennas 410a arranged at specific positions of relevance for the animal, such as a drinking station, a food station, a sleeping housing, a climbing toy or a boundary region next to a sidewall of a cage. An example of a specific location antenna 410a arranged at a food station FS is illustrated in FIG. 2. The specific location antennas 410a may be configured to transmit additional environmental data. The additional environmental data may comprise at least one of a fluid flow, a weight of a resource stored in a storage box, forces applied by the animal or a weight of the animal.

According to another embodiment, the floor transceiver circuit 40 may comprise a processing unit 430, which is configured to determine a position P2 of the animal transceiver 10 on the basis of signals respectively received by at least two floor antennas 410. As can be seen from FIG. 3B, four floor antennas 410 may be connected to one floor transceiver unit 420. However, it is also possible to connect more than four floor antennas 410 to one floor transceiver unit 420, such as nine or sixteen floor antennas 410, for example. In this case, the floor transceiver unit 420 may be configured to drive the floor antennas 410 such that an accurate positioning of the animal transceiver 10 within the floor surface 30 may be achieved. As can be seen from FIG. 3A, the position P2 may be determined within the floor surface 30 by such a positioning technique. The position P2 corresponds to a vertical projection of the center of the animal transceiver 10 to the floor surface 30. As can be seen from FIG. 3B, the logic for controlling the reader antennas as well as the matching of the floor antennas 410 may be arranged directly on the antenna circuit board. In this embodiment, 2x2 antenna arrays may be arranged next to each other in a row and a column direction to enhance the detection area. An control logic is responsible for switching between the respective floor antenna units. Thus, the detection area within the floor surface 30 may be easily enhanced by paving the respective floor antennas 410 / floor transceiver unit 420 - 2x2-arrays within the floor surface 30. In addition, it is also possible to use RFID graphic tablets having a resolution precision of down to 1 mm.

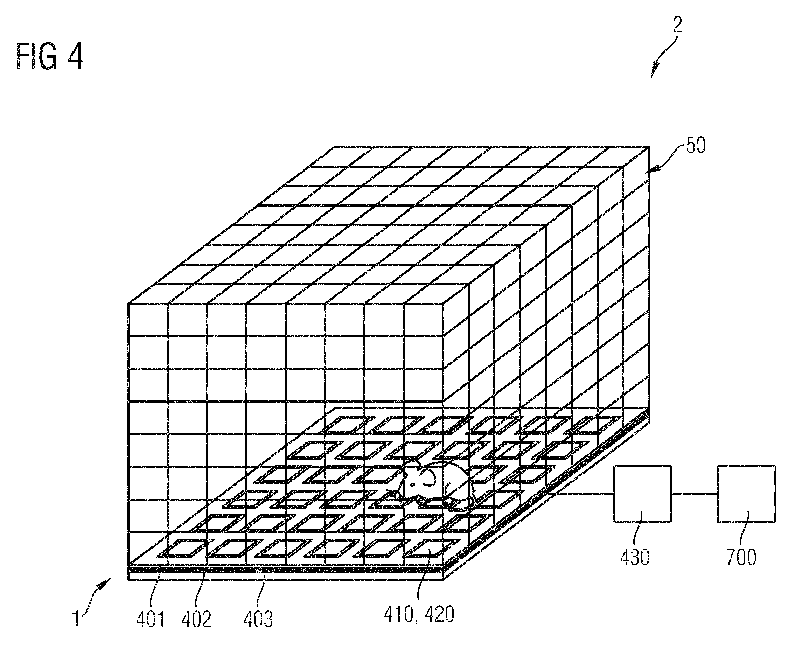

FIG. 4 is a schematic perspective view of an animal cage 2 according to an embodiment. As can be seen from FIG. 4, the animal cage 2 comprises the cage 50, which is configured to accommodate the animal 20 such as a mouse. In the case floor, the localization system 1 is provided. According to an embodiment, the floor antennas 410 are arranged in the floor antenna layer 401, which is stacked on the ferrite layer 402. By providing such a stacked layer structure of a floor antenna layer 401 and a ferrite layer 402, the interference of an animal cage 2 with another animal cage 2, which may be stacked above or below the depicted animal cage 2 is reduced due to the shielding properties of the ferrite layer 402. Thus, a multitude of animal cages 2 stacked on each other may be provided while having a reduced interference between the respective RFID communications. In addition, it should be noted that RFID communication is possible with a multitude of animal transceivers 10, since each animal transceiver 10 may have its own transceiver identity. Thus, the positioning or tracking of animal transceivers 10 may be also performed when having more than one animal 20 within the animal cage 2. As can be seen from FIG. 4, the reader array of the floor antennas 410 and the floor transceiver units 420 may be used as a bottom plate of the animal cage 2. Herein, a further substrate layer 403 may be provided to stabilize the floor antenna layer 401 and the ferrite layer 402. The additional ferrite layer 402 or ferrite plate below the antenna array in the floor antenna layer 401 enables an enhanced reading range of the reader array. In addition, the ferrite layer 402 prevents an interference of neighboured or stacked animal cages 2. The switching and reading function may be performed by a microcontroller within the processing unit 430. The processing unit 430 may be further connected with an external computation device 700 for further processing the data of the localization system 1.

FIG. 5 is a schematic block diagram of an animal transceiver 10 communicating with the floor transceiver circuit 40 according to an embodiment. As can be seen from FIG. 5, the floor transceiver circuit 40 comprises at least two floor antennas 410 electrically connected to respective floor transceiver units 420. The floor transceiver units 420 are connected via connection lines 440a to a multiplexer unit 440, which is configured to selectively switch a floor antenna 410 communicating with the animal transceiver 10 via the radio frequency signal. The multiplexer unit 440 switches the selected floor antenna 410 or a selected floor transceiver unit 420 such that it is connected to the processing unit 430 via a multiplexer connection line 430a. The processing unit 430 further comprises a control unit 435, which is configured to control the switching of the multiplexer unit 440 via a control line 435a. Thus, the floor transceiver circuit 40 comprises a multiplexer unit 440 configured to selectively switch a floor antenna 410 communicating with the animal transceiver 10 via the radio frequency signal.

The animal transceiver 10 comprises a sensor unit 100, which is configured to sense a characteristic of the body of the animal 20 in vivo. The animal transceiver 10 further comprises a transceiver unit 200, which is configured to transmit the sensor data of the sensor unit 100 via the radio frequency signal. In detail, the sensor unit 100 comprises a sensor 110, which may be configured to sense a body health parameter of the animal 20 including at least one of a body temperature, a body pulse frequency, an electrocardiogram recording, an electro-encephalogram recording, a body function, a blood sugar value, a blood pressure, or a blood heparin value, an acceleration, or chemical blood properties. The body temperature may be measured by an integrated thermometer. The body pulse frequency, the electrocardiogram recording, and the electro-encephalogram recording may be measured by electrodes integrated in an outer surface of the sensor unit 100. A blood sugar value may be measured invasively by a sensor chip analyzing blood or interstitial fluid composition or non-invasively by near infrared or infrared recording or by a photo acoustic measurements of the interstitial fluid in a subcutaneous tissue of the animal 20. In addition, a blood pressure may be measured directly by an implanted device, as will be discussed below. The blood heparin value may be measured invasively or non-invasively by the sensor unit 100 in an analogous way as the blood sugar value. The sensor data from the sensor 110 may be transmitted to a sensor communication unit 120, which transmits the sensor data to the transceiver unit 200 via a wired connection 300 such as a microwire or by a wireless connection 300' to a transceiver communication unit 210 in the transceiver unit 200. The sensor data received by the sensor unit 100 is then processed by the transceiver processing unit 220 to be sent to the floor antenna 410 via the antenna 240. The animal transceiver 10 further comprises an energy harvesting unit 230, which is configured to harvest and store electromagnetic energy received from the floor transceiver circuit 40. Thus, the animal transceiver 10 may be energized by the floor transceiver circuit 40 to perform a measurement by means of the sensor 110 and to transfer the sensor data from the animal transceiver 10 to the floor transceiver circuit 40.

According to an embodiment, the sensor data of the sensor 110 may be correlated with the position P of the animal 20 to generate a movement profile of the animal 20 correlated with respective sensor data of the animal 20 related to a body health parameter. Herein, the localization system 1 may comprise a data transmitting unit 450 to transmit the sensor data of the sensor unit 100 correlated with the position information of the animal transceiver 10 to the external computation device 700 via a data connection line 700a.

In other words, a transceiver antenna array and a control logic is provided for laboratory cages accommodating animals 20 such as a mouse. By means of the floor antennas 410, it is not only possible to locate the implanted RFID tag of the mouse within the floor surface 30, but to provide further energy for sensory devices such as the sensor unit 100. The biometric sensor data may be then be correlated with the data of the tracking unit of the floor transceiver circuit 40. According to an embodiment, a plurality of floor antennas 410 arranged in an array may be controlled by one or more reader devices. In case an RFID tag is recognized, the respective tag is provided with energy to load a respective buffer, wherein at the same time the biometric data are read.

The sensor unit 100 may be implantable into the body of the animal 20. In addition, the transceiver unit 200 may be implantable into the body of the animal 20. The sensor unit 100 and the transceiver unit 200 may be electrically connected by the wired connection 300. In another embodiment, the sensor unit 100 and the transceiver unit 200 may be configured to communicate wirelessly with each other via the wireless connection 300'. In case only the sensor unit 100 is implantable, the transceiver unit 200 may be formed as a skin patch to be attached at the skin of the animal 20. In this case, the communication between the sensor unit 100 and the transceiver unit 200 may be wireless, wherein the transceiver unit 200 acts as a booster antenna for communication between the floor antenna 410 and the sensor communication unit 120 of the sensor unit 100, having interconnected the transceiver unit 200. In case both the sensor unit 100 and the transceiver unit 200 are implantable, the sensor unit 100 and the transceiver unit 200 may be connected by a wired connection 300 for transferring data and energy between the sensor unit 100 and the transceiver unit 200. In case the sensor unit 100 generates sensor data non-invasively, e.g. by measuring a body temperature or by measuring a body fluid parameter non-invasively by optical measurements or electromagnetic measurements, the sensor unit 100 may be hermetically encapsulated within an implantable housing. The material of the implantable housing for encapsulating the sensor unit 100 may comprise ceramics, silicone on parylene coating and glass encapsulation. The implantable housing may be further fashioned from one or more of a variety of biocompatible materials suitable for long-term implantation in the animal 20. Such materials include glass, plastics, synthetic carbon-or silicon-based materials, fluoropolymers such as polytetrafluoroethylene (PTFE), perfluoroalkoxy alkanes (PFA) or ethylene tetrafluoroethylene (ETFE).

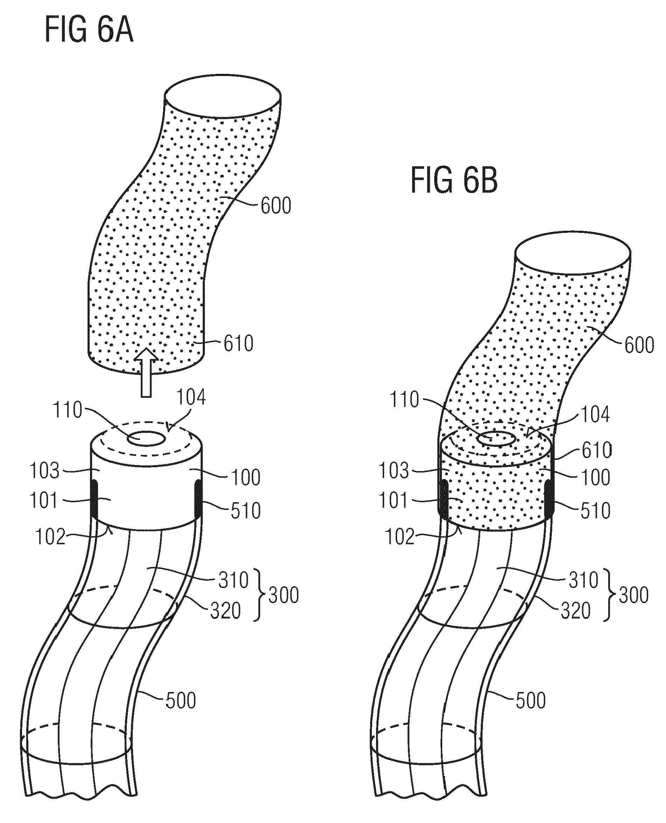

In the following, a further embodiment of the sensor unit 100 being connected to the transceiver unit 200 via the wired connection 300 will be described, wherein the sensor 110 is configured to measure a blood pressure in a vessel 600 of the animal 20. FIGS. 6A and 6B are schematic cross-sectional views of a sensor unit 100 according to an embodiment before and after insertion into a vessel end of a vessel 600. As can be seen from FIGS. 6A and 6B, the sensor unit 100 may be an integrated semiconductor circuit, which comprises a proximal part 101 plugging an end portion 510 of a tubular body 500 and having an interconnection side 102, and a distal part 103 protruding from the end portion 510 of the tubular body 500 and having a sensor side 104.

The tubular body 500 may comprise a rigid or stiff material (having an elastic module of higher than 1 kN/mm²) or a flexible material (having an elastic module of lower than 1 kN/mm²). The end portion 510 may comprise a different material than the remaining tubular body 500. The end portion 510 may comprise, for example, a rigid material such as glass, metal (e.g. titanium), silicon or a biocompatible material, wherein the remaining tubular body 500 may comprise a flexible material such as a synthetic material. The synthetic material may comprise PET, PI, or silicone. A seal junction between the open vessel end 610 and the end portion 510 of the tubular body 500 may be formed by clamping, by suture or by tying. The seal junction may be formed by pressing the tissue of the vessel 600 against the outer wall of the tubular body 500 by a tie or by a clamping device. Herein, all methods for connecting an open vessel end 610 with a tubular body 500, which are known in the surgical field, shall be included for forming the seal junction between the end portion 510 and the open vessel 610.

The sensor unit 100 may be semiconductor device, in which the sensor 110 is integrated. The sensor 110 may, for example, be a semiconductor pressure sensor. One example of a semiconductor pressure sensor may be MEMS-based pressure sensor integrated in a semiconductor die. In a MEMS-based pressure sensor, a polysilicon membrane covers a vacuum chamber in a semiconductor body, wherein the deflection of the polysilicon membrane relative to the semiconductor body may be measured positively by a piezo-electric effect. Thus, the sensor 110 may comprise a pressure sensor configured to sense a blood pressure within the vessel 600. According to an embodiment, the vessel 600 may be a carotid artery of a rodent. The rodent may be a mouse. The implantable sensor unit 100 thus allows an accurate monitoring of a blood pressure of a lab mouse with a sampling rate that allows to monitor the blood pressure transient over the heartbeat cycle instead of measuring just an average. Therefore, the micro-machined semiconductor pressure sensor of the sensor 110 is directly in contact with the blood in the vessel 600 instead of using pressure sensors connected to the vessel 600 via a fluid filled tube of at least a few centimetre length.

As can be further seen from FIG. 6A and 6B, the sensor unit 100 may be inserted into the open vessel end 610, wherein the vessel end 610 is sealed by the implantable sensor unit 100 plugging the vessel 600 without further clamping or tying. If necessary, the vessel 600 may be sealed by additional surgical measures as by clamping or tying. The implantable sensor unit 100 may be shaped in a geometry which simplifies the implantation into the vessel 600 as well as the forming a seal junction. In order to simplify the implantation process, the implantable sensor unit 100 comprising the semiconductor die may have a circular shape along a cross-sectional area at the distal part 103 or at the end portion 510 of the tubular body 500. Furthermore, the implantable sensor unit 100 may have rounded edges at the distal part 103. The rounded edges may be manufactured by depositing a photoresist onto the sensor side 104 of the semiconductor body of the implantable sensor unit 100 (excluding the area, on which the sensor 110 is provided, comprising an active pressure sensing area) and partly removing the material at the edge, e.g. by variation of the development process. Thereafter, material is partly removed from the edge of the semiconductor body of the implantable sensor unit 100 using appropriate plasma treatments, e.g. with varying mask diameters.

The implantable sensor unit 100 being an integrated semiconductor circuit may have a volume in a range between 0.1 mm³ to 20 mm³. The sensor 110 may further comprise at least one of a temperature sensor, an electrocardiogram sensor, an electroencephalogram sensor, a chemical sensor, a blood flow sensor, and a biochemical sensor.

The wired connection 300 may have a maximum diameter of 5 mm and a length in a range of 1 mm to 50 mm. Furthermore, the wired connection 300 flexibly connects the sensor unit 100 and the transceiver unit 200. As shown in FIG. 6B, the wired connection 300 may have a coax cable structure. Herein, a contiguous wiring layer 320 may be provided at the inner side of the tubular body 500, wherein an inner wiring structure 310 comprising at least one electrical line may be guided through the tubular body 500 to interconnect the implantable sensor unit 100 and the transceiver unit 200. The inner wiring structure 310 and the contiguous wiring layer 320 form a coax cable structure inside the tubular body 500. In this case, the ground signal GND as shown in FIG. 2 may be transmitted via the contiguous wiring layer 320 to shield the inner wiring structure 310 from external interferences. However, the wired connection 300 may also be provided as a cable having a multitude of wires or as a microwire structure without using the tubular body 500, for transmitting a signal between the transceiver unit 200 and the sensor unit 100. For example, the tubular body 500 may be used only for inserting the sensor unit 100 into the open vessel end 610 of the vessel 600, wherein the wired connection 300 is extended beyond the proximal end of the tubular body 500 to be connected with the transceiver unit 200. Thus, the sensor unit 100 and the transceiver unit 200 are provided as separate units, which are connected by a cable connection by means of the wired connection 300.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A localization system, comprising:
- an animal transceiver configured to be fixed to an animal to transceive a radio frequency signal; and
- a floor transceiver circuit configured to determine a position of the animal transceiver within a floor surface on the basis of the radio frequency signal received from the animal transceiver.

2. The localization system of claim 1, wherein the animal transceiver and the floor transceiver circuit are configured to transceive an RFID signal.

3. The localization system of any of the preceding claims, wherein the distance between the animal transceiver and the floor transceiver circuit in an operating state is less than 10 cm.

4. The localization system of any of the preceding claims, wherein the floor transceiver circuit comprises floor antennas arranged within the floor surface.

5. The localization system of claim 4, wherein the floor antennas are arranged in a regular pattern in a plane parallel to the floor surface.

6. The localization system of claim 4, wherein the floor antennas are planar antenna coils.

7. The localization system of any of the preceding claims, wherein the floor transceiver circuit comprises specific location antennas arranged at specific positions of relevance for the animal, including one or more of a drinking station, a food station, a sleeping housing, a climbing toy and a boundary region next to a sidewall of a cage.

8. The localization system of claim 7, wherein the specific location antennas are configured to transmit additional environmental data, the additional environmental data comprising at least one of a fluid flow, a weight of a resource stored in a storage box, forces applied by the animal and a weight of the animal.

9. The localization system of any of claims 4 to 6, wherein the floor transceiver circuit comprises a processing unit configured to determine the position of the animal transceiver as a position of a floor antenna receiving a highest signal intensity from the animal transceiver.

10. The localization system of any of claims 4 to 6, wherein the floor transceiver circuit comprises a processing unit configured to determine the position of the animal transceiver on the basis of signals respectively received by at least two floor antennas.

11. The localization system of any of claims 4 to 6, wherein the floor transceiver circuit comprises a multiplexer unit configured to selectively switch a floor antenna communicating with the animal transceiver via the radio frequency signal.

12. The localization system of any of the preceding claims, wherein the animal transceiver comprises:
- a sensor unit configured to sense a characteristic of the body of the animal in vivo; and
- a transceiver unit configured to transmit sensor data of the sensor unit via the radio frequency signal.

13. The localization system of claim 12, wherein the animal transceiver further comprises an energy harvesting unit configured to harvest and store electromagnetic energy received from the floor transceiver circuit.

14. The localization system of any of claims 12 to 13, further comprising a data transmitting unit configured to transmit the sensor data of the sensor unit correlated with the position of the animal transceiver to an external computation device.

15. The localization system of any of the preceding claims, wherein the floor transceiver circuit comprises a stacked layer structure of a floor antenna layer and a ferrite layer.
